# EUROPEAN PATENT SPECIFICATION

(11) **EP 2 881 311 B1**
(45) Date of publication and mention of the grant of the patent: **04.09.2019**
(21) Application number: 13825715.9
(22) Date of filing: 23.07.2013
(51) Int. Cl.: B62J 6/20, B60Q 1/26, B60Q 1/32

(54) **VEHICLE COMPRISING A LIGHT EMITTING DEVICE**
FAHRZEUG MIT EINER LICHT EMITTIERENDEN VORRICHTUNG
VÉHICULE ÉQUIPÉ D'UN DISPOSITIF ÉLECTROLUMINESCENT

(30) Priority: 01.08.2012 JP 2012171111
(43) Date of publication of application: 10.06.2015
(73) Proprietor: Technicalfit Corporation, Iruma-shi, Saitama 358-0002 (JP)
(72) Inventor: KOBAYASHI, Tomoaki, Iruma-shi Saitama 358-0002 (JP)
(74) Representative: advotec.
(86) International application number: PCT/JP2013/069845
(87) International publication number: WO 2014/021131

(56) References cited:
- WO-A1-2009/144629
- AU-A4- 2012 100 356
- JP-A- H1 149 059
- JP-A- 2000 155 544
- JP-A- 2003 029 677
- JP-A- 2004 276 887
- JP-A- 2004 286 204
- JP-A- 2004 314 926
- JP-A- 2006 126 423
- JP-A- 2007 238 063
- JP-A- 2007 238 063
- JP-A- 2007 276 756
- US-A- 5 548 274
- US-A1- 2004 196 647
- US-A1- 2006 158 868
- US-A1- 2007 285 938

## Description

### TECHNICAL FIELD

The present invention relates to a vehicle comprising a light emitting device which radiates electromagnetic wave to a light emitting part which is formed of luminescent material or the like.

### BACKGROUND ART

Traditionally, to visually recognize an object which is moving at night or in a dark place, a light is attached to the moving object, or the moving object is illuminated with a light.

For example, a light emitting device is disclose in a patent document 1 in which while the wheel rim of a two-wheeled vehicle is provided with luminescent sites, a ultraviolet rays illuminating means which irradiates ultraviolet rays is installed to the vehicle body frame, and by irradiating ultraviolet rays to the luminescent sites, a light emitting state along the shape of the wheel is obtained. Further, a light emitting device is disclosed in a patent document 2 in which sites that emit phosphorescent light are provided on the side surface of a wheel, and electromagnetic wave such as ultraviolet rays is radiated to the sites to emit the phosphorescent light. Further, a light emitting method is disclosed in a patent document 3 in which luminescent sites are irradiated by changing the intensity of light that is irradiated from an ultraviolet rays illuminating means.

### RELATED ART DOCUMENTS

### Patent document

Patent document 1: Japan Patent Publication No. 2004-224323
Patent document 2: Japan Patent Publication No. 2009-508762
Patent document 3: Japan Patent Publication No. 2012-183989
Patent document 4: US Patent Application No. 2007/0285938 A1

US 2007/0285938 A1, on which the preamble of claim 1 is based, discloses a bicycle comprising a phosphorescent charger such as an LED mounted to said bicycle having two wheel assemblies as rotary parts and a frame as non-rotary part, wherein phosphorescent material segments emitting light are be mounted to the wheel assemblies and said LEDs are mounted to the frame opposed to the phosphorescent material segments so that light from the LEDs strikes the phosphorescent material segments for emitting electromagnetic wave to an irradiation area having a width, wherein the phosphorescent material segments form part of said irradiation area, wherein wheel assembly has a rim and a tire which is rotatable about a rotation axis, the phosphorescent material segments are to be mounted on both sides of the wheel assembly, and the LEDs are to be located close to the rotation axis from the tire, wherein the LEDs are to be mounted on the frame to radiate the electromagnetic wave at an upward angle relative to a direction parallel to the rotation axis.

### DISCLOSURE OF THE INVENTION

### PROBLEM TO BE SOLVED BY THE INVENTION

According to the above described traditional light emitting devices, it is possible that ultraviolet rays are irradiated to the luminescent sites to emit light, or electromagnetic wave is radiated to the side surface that emits phosphorescent light to cause the phosphorescence, but light is not emitted effectively with small electric power. That is, the consumption of electric power increases unnecessarily, and the battery life may be shortened. Further, there is a problem in which when the irradiation amount of electromagnetic wave is reduced, the light emitted at the luminescent sites becomes weak, and the visibility is inferior.

Furthermore, for the traditional light emitting devices, the visibility cannot be improved stably as the rotational velocity of the wheel or the like changes, and the relation between the luminescent sites or the side surface that emits the phosphorescent light and illuminating portions (front light and the like) except the phosphorescent sites or the side surface that emits the phosphorescent light does not help improving the visibility.

The present invention is made in view of the above problems, and the present invention is intended to provide a light emitting device attached vehicle to which the light emitting device is mounted so that while the consumption of electric power is reduced, the visibility of light emitting part is improved even if the consumption of electric power is reduced. Further, the present invention is intended to provide a light emitting device and a light emitting device attached vehicle to which the light emitting device is mounted for which the visibility is improved by considering the relationship between the light emitting part and portions except the light emitting part.

### MEANS TO SOLVE THE PROBLEM

To achieve the above objects, the present invention provides a light emitting device mounted to a vehicle having a rotary part and a non-rotary part. The light emitting device has a light emitting part to be mounted to one of the rotary part and the non-rotary part, and an electromagnetic wave radiating means, to be mounted to the other of the rotary part and the non-rotary part, for emitting electromagnetic wave to be light emitting part, and the electromagnetic wave radiating means is set so that a range of at least 1.2 times a width of the light emitting part becomes an irradiation area.

In the above described light emitting device, by setting the irradiation area where electromagnetic wave is irradiated from the electromagnetic wave radiating means to be more than 1.2 times the width of the light emitting part, the light emitting part can be surely in an area where the intensity of the electromagnetic wave is high, and the light source can be utilized effectively, heat generation can be reduced, and visibility can be surely ensured. That is, it is possible to irradiate the light emitting part mainly with an area where the intensity of the electromagnetic wave is high. Thereby, while the consumption of electric power can be reduced, it is possible to improve the visibility of the light emitting part in spite of electric power consumption. In this case, it is preferable that the width of the electromagnetic wave is, 20% or more, wider than the width of the light emitting part, and it is preferable to set, 10% or more, wider at each side of the width of the light emitting part. If the intensity is adjusted with a lens or the like, it is preferable to set so that electromagnetic wave in a high-intensity area strikes the light emitting part. In terms of an area where the intensity of electromagnetic wave is high, in the case of a laser beam, the electromagnetic wave can be uniformly irradiated, but, in the case of an LED, there are a part where the intensity of the electromagnetic wave is high and a part where the intensity of the electromagnetic wave is low. Therefore, to improve the visibility of the light emitting part, it is preferable that the part of the electromagnetic wave which has a high intensity strikes the light emitting part.

The light emitting device can be widely used for an article (vehicle) with a rotary part and a non-rotary part. Herein, the rotary part corresponds to a "moving" part which makes a movement such as a circular rotation, an oval rotation, a reciprocation or a combination of these movements, and, for example, in the case of a bicycle, corresponds to parts such as a wheel, a tire, a spoke and a chain. The light emitting part corresponds to a part which has the light emitting property of luminescent material which receives irradiated electromagnetic wave to emit light. The non-rotary part means a part which does not move relative to the rotary part, and, for example, in the case of a bicycle, corresponds to the vehicle body (frame part) or the like. Further, the electromagnetic wave corresponds to electric wave, infrared rays, visible rays, ultraviolet rays, X-rays or the like, and the electromagnetic wave radiating means corresponds to a means which radiates the above described electromagnetic wave, and makes the light emitting part emit light. In particular, the electromagnetic wave radiating means may include one or more means in an illuminating means such as an LED as the source of light, a mean to send electromagnetic wave from the illuminating means to the light emitting part, and a circuit board (circuit mounted article) to radiate the electromagnetic wave.

The light emitting device of the present invention has a control unit which pulse-controls the electromagnetic wave radiated from the electromagnetic wave radiating means at a frequency of 5 or more times per one second and at an electromagnetic wave radiation ratio per unit time of 50% or less on average.

In this case, the frequency may be 5 or more times per a second, but preferably may be 20 or more times per a second or not less than 24 times per a second. The electromagnetic wave radiation ratio means the ratio of the electromagnetic wave radiation amount radiated to the light emitting part to the whole electromagnetic wave radiated in a unit time, and may be 50% or less on average, or less than 50% on average. In a short time, for example, at the time of a start, it is also possible to use an amount greater than 50%. It is preferable for safety that the "visually recognizably" means such a brightness that it is possible to visually recognize at a distance of 10M (meter) in the dark.

Further, the above described light emitting device may have a power supply which supplies electric power to a light mounted on the vehicle, and the control unit may control the electromagnetic wave radiating means to radiate electromagnetic wave with an electric power smaller than a peak electric power that can be supplied, to make the light emitting part visually recognizably emit light, and concurrently supply electric power to the light.

The power supply corresponds to a part to supply electric power such as a battery or a hub dynamo or an inserted part to supply electric power, and the peak electric power is determined by the specification of the battery or the hub dynamo to be used. For example, in the case of a 6V (volt) in the specification, the peak electric power occurs when a voltage of 6.75V is applied. The pulse control is performed so that the electric current amount applied to the light is on average larger than that applied to the light emitting part. It is preferable to make the light emitting part emit light with the minimum applied current necessary for the light emitting part to emit light at a predetermined brightness by utilizing the luminescence of the luminescent material. Thereby, while the visibility of the light emitting part is improved, the light can be brighter. Even when a plurality of lights are used, it is possible to supply necessary electric power.

Further, the above described light emitting device may includes an optical member which changes the electromagnetic wave radiated from the electromagnetic wave radiating means into a beam form, a converging form or a diverging form to become oriented toward a predetermined direction to be radiated to the light emitting part.

In this case, the beam form means, for example, a laser beam which is radiated by using a laser oscillator. Further, the converging form and the diverging form means to converge or diverge by using a convex lens, a concave lens, a concave mirror or the like. Therefore, even if the light emitting part and the electromagnetic wave radiating means are separated, regardless of the distance between them, an electromagnetic wave of the most suitable size, shape and the like can be radiated to the light emitting part, and the visibility of the light emitting part can be improved.

Further, the light emitting part may have a luminescent material layer. In this case, the luminescent material layer may have a part with a large amount of luminescent material per unit area and a part with a small amount of luminescent material per unit area.

The luminescent material layer means a layer which has luminescent material, and the parts of the luminescent material lays with a large/small amount of luminescent material can be obtained by adjusting the thickness or shape of the luminescent material layer or by adjusting mixture density. Further, since the luminescent material begins to emit light after having absorbed a predetermined amount of electromagnetic wave, if there are many particles in the luminescent material, the electromagnetic wave absorption time of the particles gets longer, and much time is required until the light-emitting, but the visibility can be maintained for a long time after the light-emitting begins. On the other hand, the part with a small amount of luminescent material begins to emit light quickly, but the visibility can be maintained only for a short time. Therefore, by forming the part with a large amount of luminescent material and the part with a small amount of luminescent material in the radiation range of the electromagnetic wave (a range to be radiated at the same time), even if the time to emit electromagnetic wave changes (even if the rotary speed of the wheel changes), the visibility can be improved.

Further, the above described electromagnetic wave radiating means may radiate the electromagnetic wave in a direction inclined relative to a direction perpendicular to the light emitting part.

In this case, for the inclined direction, the circumferential direction that is the rotating direction of the wheel, a direction from the axis of the wheel to the circumference of the wheel (radial direction), and a combination of the circumferential direction and the radial direction are considered. Further, due to the relation between the radiation direction of the electromagnetic wave and the light emitting surface, the electromagnetic wave is radiated in the form of a thin beam at the radiation stage, and the electromagnetic wave can strike the light emitting part in a wide range (area). Thus, the light emitting part is noticeable and the visibility of the light emitting part can be improved. Further, because, by inclining in the circumferential direction, the electromagnetic wave can strike the light emitting part for a relatively long time even when the wheel rotates, the light emitting part can be brighter and the visibility can be improved.

Further, the rotary part may have a tire which is rotatable about a rotation axis, and the light emitting part is to be mounted on the rotary part. In this case, the electromagnetic wave radiating means may be located between the rotation axis and the tire, and the electromagnetic wave radiating means may be installed to the non-rotary part of the vehicle to radiate the electromagnetic wave at an upward angle relative to a direction parallel to the rotation axis.

In this way, the horizontal distance between the electromagnetic wave radiating means and the light emitting part can be set small, and it is possible to make the light emitting part emit light efficiently.

Various vehicles such as a bicycle, a stroller, a unicycle, a motorcycle, a car or a toy car can be provided with the above described light emitting device.

### EFFECT OF THE INVENTION

According to the present invention, while the consumption of electric power can be reduced, it is possible to improve the visibility of the light emitting part in spite of electric power consumption.

### BRIEF DESCRIPTION OF THE DRAWINGS

Fig. 1 is a whole schematic view which shows an example (bicycle) of the vehicle according to the present invention.
Fig. 2 shows a schematic constitution of an illuminating system carried in the bicycle shown in Fig. 1.
Fig. 3 is a front view of a front wheel illumination which is placed on a part of a fork of the bicycle shown in Fig. 1.
Fig. 4 is a side view of the front wheel illumination which is placed on the part of the fork of the bicycle shown in Fig. 1.
Figs. 5 (a) to 5 (c) are waveform figures which show examples of pulse-controlling electromagnetic wave radiated from an electromagnetic wave radiating means, respectively.
Fig. 6 shows that a beam of electromagnetic wave diverges and strikes a light emitting part.
Fig. 7 shows that a beam of electromagnetic wave converges and strikes a light emitting part.
Fig. 8 is a sectional view which shows the structure of a light emitting part.
Fig. 9 shows an example in which light emitting parts are arranged on the rim of a wheel to be spaced by an interval in the circumferential direction.
Fig. 10 shows a relation between a light emitting part and an electromagnetic wave radiation state.
Fig. 11 shows that the radiation direction of an electromagnetic wave is arranged to form an angle (angle in the circumferential direction) with a light emitting part so that the electromagnetic wave can be radiated in a long range in the circumferential direction.
Fig. 12 shows an example in which light emitting parts (luminescent material layers) and illuminations are placed in a wheelchair as the vehicle.
Fig. 13 shows an example in which light emitting parts (luminescent material layers) and illuminations are placed in a stroller as the vehicle.
Fig. 14 shows an example in which light emitting parts (luminescent material layers) and illuminations are placed in a motorcycle as the vehicle.

### MODE FOR CARRYING OUT THE INVENTION

Embodiments of the present invention are described with reference to the figures as follows.

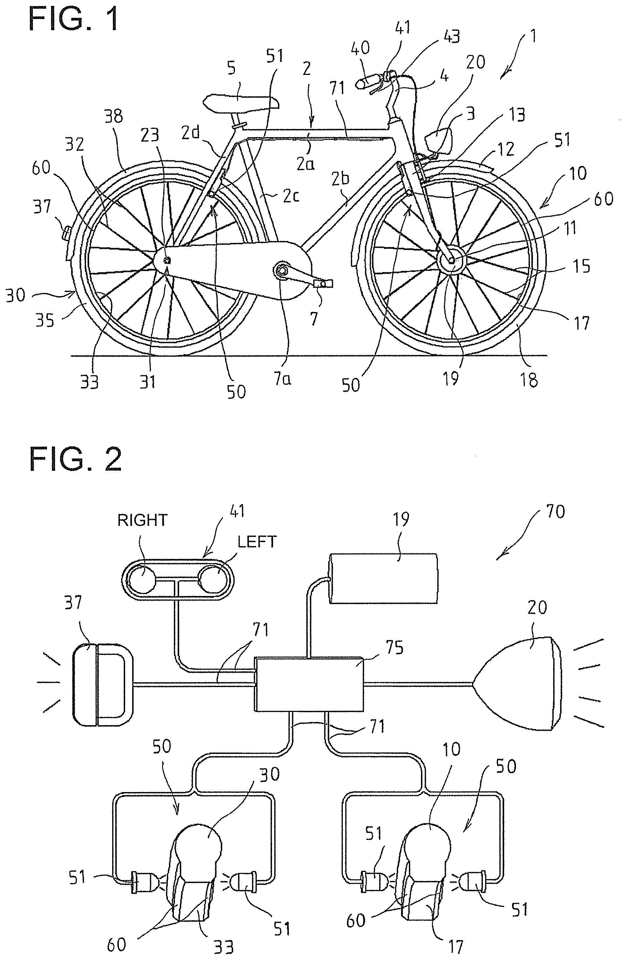

Fig. 1 is a side view of a bicycle which shows an example of vehicles according to the present invention.

First, with reference to Fig. 1, the whole constitution of the bicycle is described.

A bicycle body (frame) 2 of a bicycle 1 has a structure of Fig. 1 which has an upper pipe 2a, a lower pipe 2b, a vertical pipe 2c, and a rear pipe 2d. A fork 3 and a handle 4 are connected to the front part of the bicycle body 2, and are rotatably attached to the bicycle body 2. A saddle 5 is detachably placed at the upper part of the vertical pipe 2c, and pedals 7 are rotatably placed at the lower part of the vertical pipe 2c.

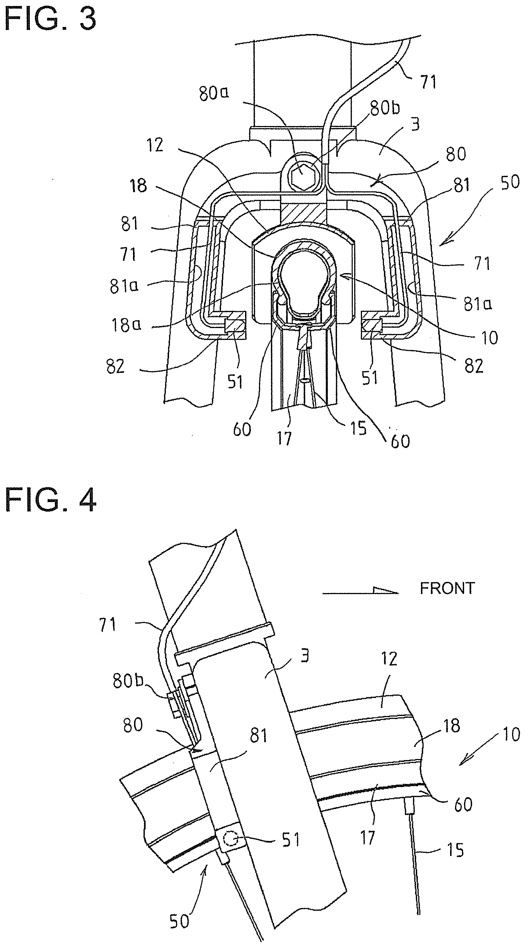

The fork 3 extends from the handle side to the position of a hub (axis) 11 of a front wheel 10. A fender 12 and a brake 13 are disposed, as well known, onto the fork 3, and the axle (hub 11) to which the front wheel 10 is attached is supported at the lower part of the fork 3. In this case, the front wheel 10 includes the hub 11, a spoke 15, a rim 17 and a tire 18 which is located at the outside of the rim 17, and a tube 18a (refer to Fig. 3) is provided inside the tire. Further, part of the hub of the front wheel 10 is provided with a hub dynamo (generator; power supply) 19 which supplies electric power to a front light 20 which is provided above the fork. The front light 20 may be placed in front of the fork.

An axle 23 to which a rear wheel 30 is attached is supported at the lower part of the rear pipe 2d. Like the front wheel, the rear wheel 30 includes a hub 31, a spoke 32, a rim 33, and a tire 35 which is located at the outside of the rim 33, and a tube is provided inside the tire 35. Further, the axle 23 of the rear wheel 30 and an axle 7a of the pedals 7 are respectively provided with gears, which are connected by a chain. A fender 38, at the rear part of which a tail light 37 is placed, is attached to the rear pipe 2d. The tail light may be placed at a position above the vertical pipe.

At the right and left sides of the handle 4, grips 40 and blinkers 41 are placed, and operating levers 43 of the brake 13 are placed. Specifically, the operating levers which are provided at the right and left sides are connected to the brakes for the front wheel and the rear wheel through brake wires.

Illuminations (which are formed of LEDs in the present embodiment) 51 as an electromagnetic wave radiating means of a light emitting device 50 are placed at the rear part of the fork 3. The illuminations (referred to as LEDs) 51 are opposed to light emitting parts 60 provided to the wheel (front wheel), and irradiate visible rays (electromagnetic waves) to the light emitting parts 60. As shown in the figure, it is preferable that the light emitting parts 60 are provided at at least one of the right and left side surfaces or the inner side (two sides of the position where the spoke is attached) of the rim 17 of the front wheel 10, but the light emitting parts 60 may be placed on the side surface of the tire or part of the spoke.

Like the front wheel 10, a rear wheel light emitting device 50 is placed at the front part of the rear pipe 2d, and is opposed to light emitting parts 60 provided to the rear wheel (in the following description, the front wheel light emitting device is described in detail). In this case, if necessary, the handle part may be provided with an operating member of an illuminating system 70 (refer to Fig. 2) which includes the aforementioned front wheel and rear wheel LEDs 51, front light 20, tail light 37 and blinkers 41. Further, connecting cables 71 of the illuminating system 70 are placed to extend along the outside of the bicycle body, but the connecting cables 71 may be placed through a hollow part inside the bicycle body.

Next, with reference to Fig. 2, the whole constitution of the above illuminating system which is mounted on the bicycle is described.

The illuminating system 70 has the power supply 19, the front light 20, the tail light 37, the blinkers 41, the LEDs 51 and the connecting cables 71 which connect them. The illuminating system 70 has a control unit 75 to control electric power supply from the power supply 19 to the illuminating parts. The control unit 75 includes a control circuit board which controls the turning on/off of the aforementioned illuminating elements, and in the present embodiment, the control circuit board is disposed at one place of the control unit 75.

The control unit (control circuit board) has a function of delivering an electric current of 6V from the power supply 19 to necessary locations of the front light 20, the tail light 37, the blinkers 41 and the LEDs 51. Further, semiconductor diodes for rectification, detection, switch and the like, and a fixed resistor-condenser for voltage smoothing are mounted on the control circuit board. By using the condenser as an electric storage so that the lights maintain in a turned-on state for a predetermined time (for example, 30 seconds or more), it becomes possible to irradiate even when the bicycle stops to wait a signal. Alternatively, at the time of stopping where electric power cannot be generated by the power supply 19, power supply from a separately prepared auxiliary battery may be used.

Further, the control unit (control circuit board) is provided with an oscillator (squarewave transmitter) for pulse control and, if necessary, an ammeter. Furthermore, a heat dissipating plate is placed at the position where the control circuit board of the control unit is installed so that the control circuit board is cooled so as not to be hot.

Not only the control unit 75 can sense the brightness to automatically turn on/off the lights, but also a control circuit board may be incorporated so that a user can finely adjust the brightness of the illuminating elements with a manual operating unit. Further, the control unit 75 may control to turn on/off all of the front light 20, the tail light 37 and the blinkers 41, or selectively control any of these elements.

The power supply 19 includes the hub dynamo which is placed at the front wheel 10, but may be formed by combining a chargeable battery, a dry cell or the like. The light emitting devices 50 are placed at two places of the front wheel and the rear wheel, but may be placed only at the front wheel or the rear wheel. The position of the control unit 75 is arbitrary, but by placing the control unit 75 in an illuminating element (for example, the front light) or inside the power supply (the hub dynamo or battery), the control circuit board can be protected and compactness and design improvement become possible. The control unit may be provided for each illuminating element, and the control unit of the light emitting device 50 and the control unit of the front light 20 may be integrated so that a plurality of illuminating elements are integrally controlled.

Next, with reference to Figs. 3 and 4, the constitution of the front wheel light emitting device 50 which is placed at the fork portion is described. As described above, the light emitting device 50 includes the LEDs 51 and the light emitting parts 60.

The LEDs 51 are fixed to the fork 3 through an attachment member 80. The attachment member 80 is fixed to the fork 3 by using a fixing bolt 80a and a fixing nut 80b through which the fender 12 is attached to the fork 3. The attachment member 80 includes a pair of arms 81 which are formed to extend respectively rightward and leftward from the fixing part, and whose distal ends at two sides are bent downward to extend downward along the fork. The distal ends of the pair of arms 81 are provided with receiving parts 82 which are formed by being bent toward the rim of the front wheel, and the LEDs 51 are received in the receiving parts 82. The arms 81 have a rectangular or elliptical cross section, and have hollow parts 81a of a predetermined thickness. The arms 81 are press-formed of a metal plate or integrally molded with synthetic resin material, and the manufacturing method and the material are arbitrary. The connecting cables 71 are disposed inside the hollow parts 81a, and the connecting cables 71 further extend from the proximity of the fixing part toward the front light 20.

The two inclined side surfaces 17a of the rim 17 of the front wheel 10 are provided with the light emitting parts 60. The light emitting part of the present embodiment is formed of luminescent member (composite layer) having luminescent material (luminescent material layer), and the luminescent member (light emitting part 60) is opposed to the right/left LED 51 so that light from the right/left LED 51 strikes the luminescent member. Thereby, because the light radiated by the LED 51 strikes the luminescent material layer, the luminescent material emits light, and a ring-shaped light emitting state can be visually recognized with the rotation of the wheel.

As shown in Fig. 3, the LEDs 51 are disposed at a position close to the axle (rotation axis) from the tire 18. Preferably, the LEDs 51 are disposed at parts which correspond to a position where the width of the rim 17 is reduced, or at parts which correspond to a position where the spoke 15 is fixed. That is, the LEDs 51 are disposed so that the lights of the LEDs 51 are radiated to the light emitting parts 60 at an angle upward relative to a direction parallel to the axle (as shown in Fig. 3, the LEDs 51 are shifted downward, and the lights are radiated to the light emitting parts 60 which is located above the LEDs 51).

Usually, the part of the wheel of a bicycle that is easiest to vibrate rightward/leftward in driving is located far from the axle (in particular, the tire 18 which is farthest from the axle). If the LEDs are disposed at this part, the LEDs are likely to contact the tire. However, by lowering the positions of the LEDs 51, the horizontal distance between the LEDs and the light emitting parts can be set short, and the light emitting parts 60 can be made emit light efficiently. Further, by lowering the positions of the LEDs, it becomes easy to prevent the LEDs from contacting the wheel (in particular, the tire).

The LEDs 51 are so set that the direction in which the LEDs 51 radiate light to the central positions of the light emitting parts 60 is in a range of upward 5°∼70°, preferably 10°∼50° relative to a direction parallel to the axle. In this way, it is possible that the horizontal distance between the LEDs 51 and the light emitting parts 60 is less than 10mm (however, a distance in such a range that the LEDs will not come in contact with the wheel). The above constitution applies to both of the front wheel 10 and the rear wheel 30, but may apply to either of the wheels arbitrarily.

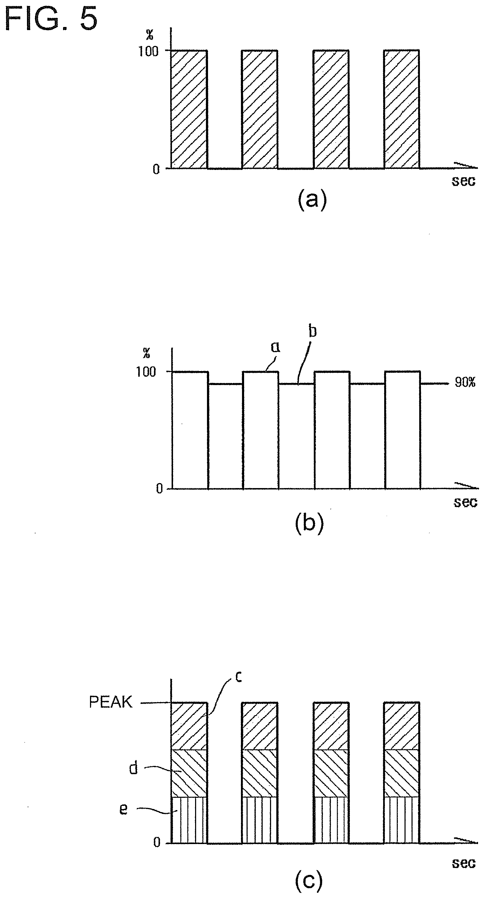

The light emitting state of the LEDs 51 of the light emitting device 50 constructed as described above is adjusted by the control unit 75. That is, the LEDs 51 is pulse-controlled by the control circuit board of the control unit 75, and the timing of the turning-on/off of the LEDs 51 is controlled. Examples of the pulse control are described with reference to Fig. 5 as follows.

The pulse control is carried out by the number of pulses in one second (frequency) provided by an oscillator. The duty ratio of the provided pulses is set according to the purpose, and the duty ratio can be increased, for example, at the time of a start. Figs. 5 (a) to (c) are examples of using a squarewave oscillator. Further, the period of a para-sine wave is decided by the plus/minus inversion period of the pulses, and the amplitude (the voltage) of the para-sine wave is decided by the width and interval of the pulses (the duty ratio). In this case, because the pulses can be flexibly generated by a digital control circuit, the amplitude and the period can be various values. For example, pulse width modulation, pulse amplitude modulation, pulse intensity modulation, pulse position modulation, pulse code modulation or the like can be performed. Because peak electric power can be controlled by shifting electric powers consumed at a time by the pulse control of the respective parts, it is possible to simplify the circuit. Thereby, because the heat generation can also be controlled, heat measures for the respective parts can be taken easily.

Fig. 5 (a) shows a pulse waveform example, with which the electric current to the LEDs 51 is controlled, from a squarewave oscillator. The control is made on conditions that the ratio of the electric current to be sent to the LEDs to the electric current supplied from the power supply is 50% or less, and the light emitting parts emit light. In this case, the frequency may be more than five times a second, but preferably may be more than 20 times a second or more than 24 times a second.

Fig. 5 (b) shows a pulse waveform example which includes two kinds of a (100% electric current) and b (less than 100% electric current, for example, 90%), one of which is used to the LEDs 51 and the other of which is used to the front light 10 when the pulse control is performed. In this case, the LEDs 51 and the front light 20 emit light with an electric power less than a peak electric power (decided by the specification of the power supply) that can be supplied from the power supply. It is preferable that the electric current amount applied to the LEDs by the pulse control is on average larger than that applied to the front light (it is preferable that a is for the front light and b is for the LEDs). That is, because it is possible to make the LEDs emit lights at a minimum applied electric current which is necessary for the light emitting parts 60 to be made emit light at a predetermined brightness due to the luminescence of the luminescent material, the visibility of the light emitting parts 60 is improved and the front light is irradiated more brightly. Even when a plurality of lights are used, it is possible to supply necessary electric power. Further, both a and b may be used to the LEDs (for example, the front wheel LEDs and the rear wheel LEDs), and even in this case the used electric power can be reduced.

Fig. 5 (c) shows a pulse waveform example, in which when the pulse control is performed, three of c (LEDs), d (front light) and e (tail light) are pulse-controlled within the peak electric power, and can have the same plus/minus inversion period. The distribution ratio of the electric current to these three illuminating elements may be set arbitrarily depending on specifications.

Further, the LEDs 51 may be controlled so that the turning-on/off is repeated many times (for example, around 30 times) in one second. By controlling the LEDs to turn on/off many times per one second, it is possible to make human eyes feel like that the LEDs continuously turn on. Therefore, for the construction that the LEDs 51 are disposed at a plurality of places, as shown in Fig. 2, by controlling the LEDs to turn on/off, even if actually the voltage is unable to make the plurality of LEDs turn on at the same time, it is possible to make human eyes feel like that the plurality of LEDs continuously turn on.

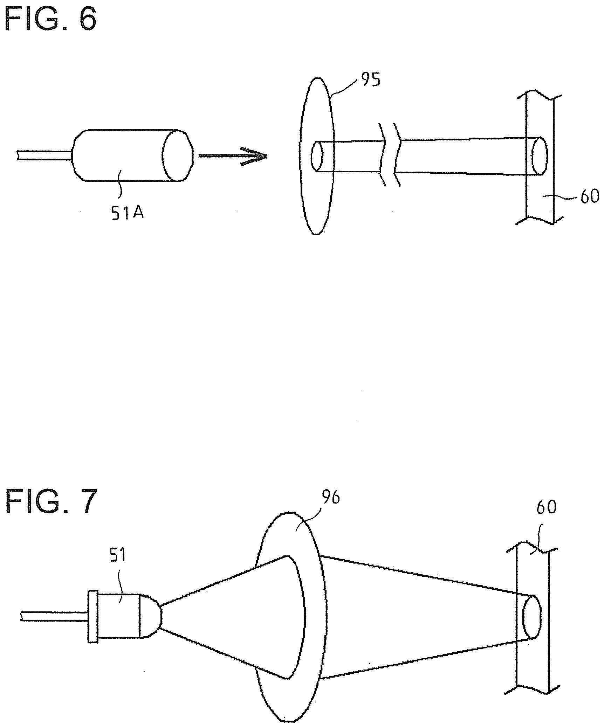

Fig. 6 shows an example in which a laser oscillator as the illumination is used, and a laser light diverges and strikes the light emitting part 60. In this example, a lens (concave lens) 95 is placed between a laser oscillator 51A and the light emitting part 60, and a laser beam diverges and strikes the light emitting part. Thereby, regardless of the size (cross section) of the laser beam radiated from the laser oscillator 51A, it is possible that a light of the most suitable size strikes the light emitting part 60.

Fig. 7 shows an example in which a light from the LED 51 converges and strikes the light emitting part 60. In this example, a lens (convex lens) 96 is placed between the LED 51 and the light emitting part 60, and a light converges and strikes the light emitting part. Thereby, even if the light from the LED 51 is radiated to spread out, it is possible that the light of the LED strikes the light emitting part optimally. An adjusting mechanism may be disposed to adjust the distance between the light emitting part 60 and the lens 96. Because the focus is decided by the lens to be used, when the distance between the light emitting part and the lens can be adjusted, it is possible that the light is irradiated (adjusted) to the light emitting part (equivalent to the width of the luminescence tape) within the most suitable area.

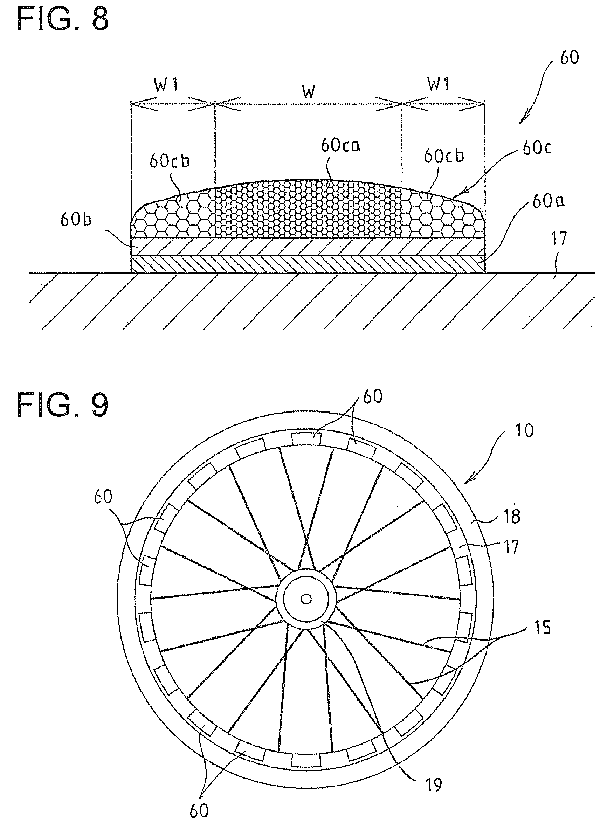

Fig. 8 is a sectional view which shows a constitution of the above described light emitting part (luminescent member) 60, and shows an example of adjusting the light emitting amount of the light emitting part 60 by the constitution of the light emitting part 60. In particular, the luminescent member (light emitting part 60) of the present embodiment is formed by applying an adhesive layer 60a to the surface portion of the rim 17 of the wheel, laminating a light reflecting layer 60b on the adhesive layer 60a, and laminating a luminescent material layer 60c on the light reflecting layer 60b. That is, through the adhesive layer 60a, the luminescent material layer 60c and the light reflecting layer 60b are adhered to the rim.

The light reflecting layer 60b has a function of reflecting back the light emitted from the luminescent material layer 60c to the surface side to improve the visibility more brightly. In this case, it is preferable that the light reflecting layer 60b is formed of a white-colored or mirror-finished material which can reflect light. The thickness of the light reflecting layer 60b is arbitrary, but may be thinner than that of the luminescent material layer 60c, and is preferably less than 50% of the thickness of the luminescent material layer 60c.

Further, the luminescent material layer 60c has a part with a large amount of luminescent material per unit area and parts with a small amount of luminescent material per unit area. As shown in the figure, a central portion 60ca has a large thickness and a large amount of luminescent material, whereas two sides 60cb of the luminescent material layer 60c has a small thickness and a small amount of luminescent material. Thereby, the luminescent material layer 60c can be configured so that the part (the central portion 60ca) where the amount or density of the luminescent material is large emits light for a long time, while the parts (two sides 60cb) where the amount or density of the luminescent material is small starts to emit light relatively quickly. By having the characteristics of both parts, it becomes possible to improve the visibility of the light emitting part 60. Alternatively, the width W of the central portion 60ca may be larger than the total width 2W1 of the two sides 60cb (W> 2W1).

Fig. 9 shows an example in which the light emitting parts 60 constructed as described above are arranged on the rim of the wheel to be spaced by an interval along the circumferential direction.

By setting the distance between the light emitting parts (the circumferential length of a part where a light emitting part is not disposed) not more than 10cm, preferably not more than 4cm, it is possible to visually recognize the light emitting parts in the whole circumferential direction of the wheel at a speed around that a person walks. It is preferable to dispose the light emitting parts 60 in a range of 50% or more of all the circumferential length. Further, it is preferable to form the light emitting parts before and after the interval to have a length equal to or longer than that of the interval (the length of the light emitting parts ≥ the length of the interval).

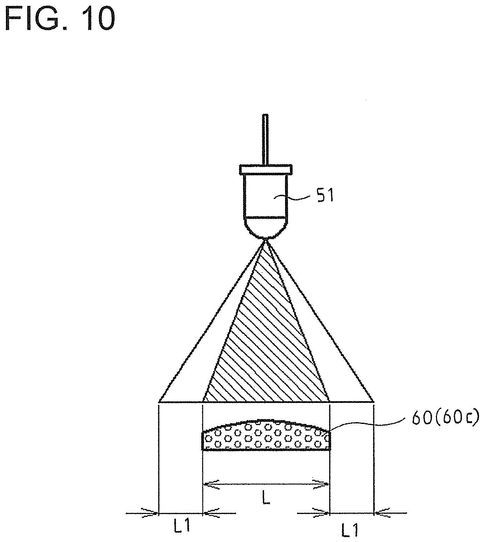

Fig. 10 shows a relation between the light emitting part 60 and the state of a light irradiated from the illumination (LED).

Usually, even when the light from the illumination is irradiated in a bundle, the light is not completely uniformly distributed, but strong near the center and dispersed and weak around the periphery. In this case, as shown in the figure, when the light is irradiated in a range wider than the width of the light emitting part 60 (luminescent material layer 60c) and a light of high intensity strikes the surface of the luminescent material layer 60c, the visibility of the light emitting part 60 can be improved. Specifically, the width of the light that strikes the surface of the light emitting part 60 (luminescent material layer 60c) is set so that the light strikes a range wider 10% or more of the width at each side of the light emitting part 60 (L1 >= L/10). That is, the LED is set so that a range of at least 1.2 times the width of the light emitting part 60 becomes an irradiation area. In this case, if there is a clear intensity boundary between a strong part and a weak part of the irradiation light, it is preferable that mainly the strong part where the intensity is high strikes the luminescent material layer.

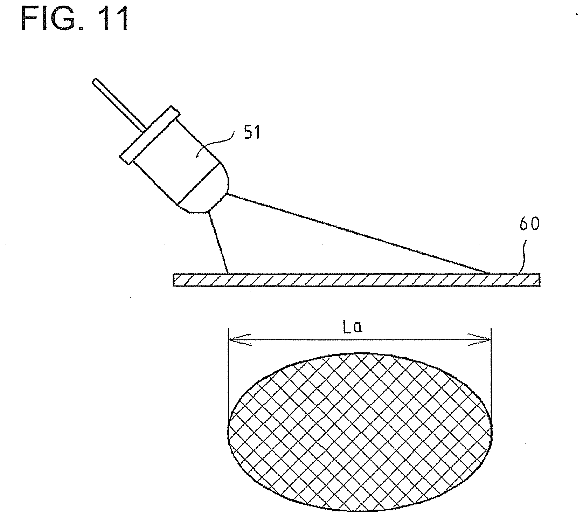

Fig. 11 shows an example in which the irradiation direction of the LED is arranged to form an angle with the light emitting part 60 (the LED irradiates from a direction inclined from the vertical direction) so that the light from the illumination can be irradiated in a long range in the circumferential direction.

As illustrated, when the irradiation direction is not perpendicular to the surface of the light emitting part 60, but is inclined (with an angle), it becomes possible to irradiate the light to the light emitting part 60 in a wider (longer) range (a range La which is wider than L + 2L1 as shown in Fig. 10). Even if the light emitting parts 60 formed on the wheel are rotated, the light can be irradiated in a relatively long time. Thereby, the luminescence of the luminescent material layer can be increased, and the visibility can be improved.

In terms of the direction in which the light emitting part 60 is inclined, the light emitting part 60 may be inclined relative to the circumferential direction that is the rotating direction of the wheel, inclined relative to a direction (radial direction) from the axis of the wheel to the circumference of the wheel, or inclined relative to a combination of the circumferential direction and the radial direction.

Further, when the LED irradiates obliquely to the light emitting part, the center of the luminescence tape does not often correspond to the irradiation center of the LED. That is, as the LED irradiates light to the luminescent tape at an inclined angle rather than a right angle, there would be a difference in distance in the area reached by the light. The light in a range far from the LED irradiation center is darker than the light in a range near the LED irradiation center. In such a case, an adjustment may be performed so that the irradiation center of the LED is adjusted to become far from the LED and the whole LED emits light uniformly. For example, the irradiation center of the LED may be adjusted to the center of the width of the light emitting part in the radial direction to become far from the LED.

It is shown above that the light emitting device 50 according to the present invention is carried in a bicycle, but the above described light emitting device can be installed in not only a bicycle, but also various vehicles.

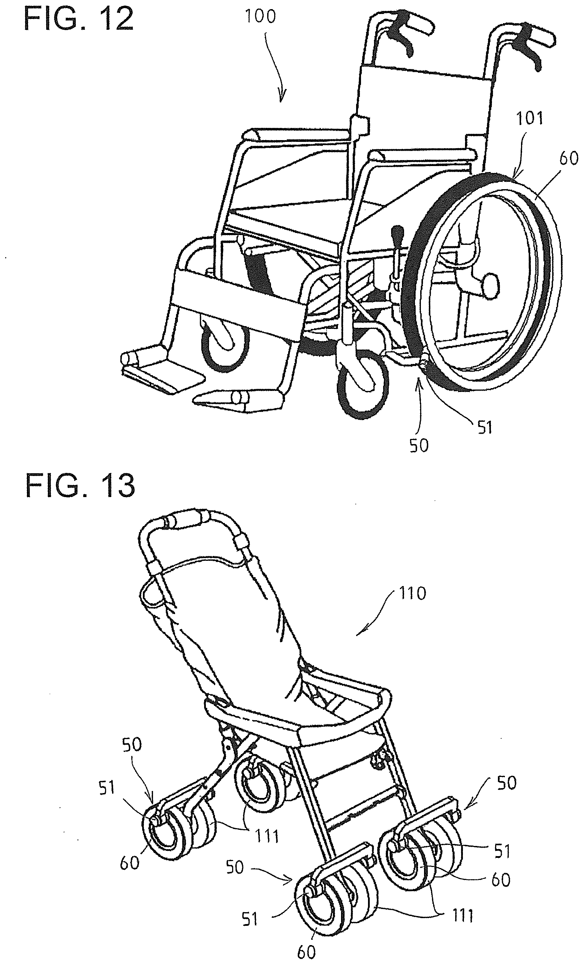

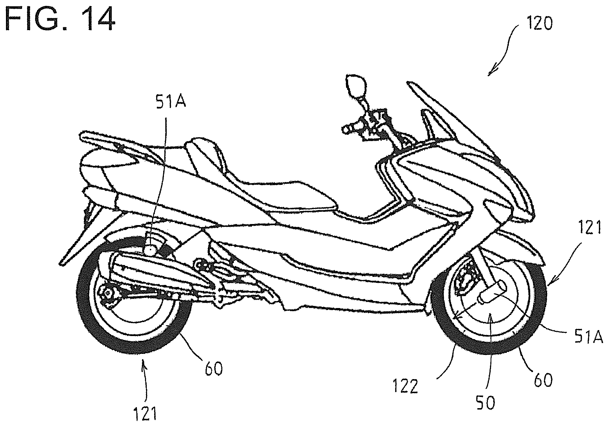

For example, as shown in Fig. 12, the above described light emitting parts 60 and the illuminations (LEDs 51) may be placed in wheels 101 of a wheelchair 100, and as shown in Fig. 13, the above described light emitting parts 60 and the illuminations (LEDs 51) may be placed in wheels 111 of a stroller 110. Alternatively, as shown in Fig. 14, the above described light emitting parts 60 and the illuminations (LEDs 51) may be placed in wheels 121 of a motorcycle 120. In this example, laser beams from the axle portions of the front and rear wheels of the motorcycle are irradiated to the light emitting parts 60 formed on rims 122 of the wheels. By irradiating the laser beams from the axle portions in this way, even if there is any movement in the wheels, the laser beams can be irradiated in a stable state, and while the visibility of the light emitting parts 60 is improved, the visibility can be stabilized.

The present invention is not limited to the previously described embodiments, and various changes can be made in a range without departing from the scope of the present invention. The constitutions described with reference to the above Fig. 1 to Fig. 14 can be used by being optionally, respectively combined.

### DESCRIPTION OF REFERENCE NUMERALS

- 1: bicycle (vehicle)
- 10: front wheel
- 19: hub dynamo (power supply)
- 30: rear wheel
- 50: light emitting device
- 51: LED (electromagnetic wave radiating means)
- 60: light emitting device
- 70: illuminating system
- 75: control unit
- 100: wheelchair (vehicle)
- 110: stroller (vehicle)
- 120: motorcycle (vehicle)

## Claims

1. A vehicle (1, 100, 110, 120) comprising a light emitting device (50) mounted to said vehicle (1, 100, 110, 120) having a rotary part and a non-rotary part, wherein the light emitting device (50) has a light emitting part (60) to be mounted to one of the rotary part and the non-rotary part, and an electromagnetic wave radiating means (51), to be mounted to the other of the rotary part and the non-rotary part opposed to the light emitting part (60) so that light from the electromagnetic wave radiating means (51) strikes the light emitting part (60), for emitting electromagnetic wave to an irradiation area having a width, wherein the light emitting part (60) forms part of said irradiation area, wherein the rotary part is a wheel having a rim (17, 33) and a tire (18, 35) which is rotatable about a rotation axis (11, 23), the light emitting part (60) is to be mounted on both sides of the rim (17, 33), and the electromagnetic wave radiating means (51) is to be located close to the rotation axis from the tire (18, 35), wherein
the electromagnetic wave radiating means (51) is to be mounted on the non-rotary part of the vehicle (1, 100, 110, 120) to radiate the electromagnetic wave at an upward angle relative to a direction parallel to the rotation axis (11, 23), **characterized in that**
the electromagnetic wave radiating means (51) is set so that the width of the irradiation area is at least 1.2 times a width of the light emitting part (60),
wherein the light emitting device (50) has a control unit (75) which pulse-controls the electromagnetic wave radiated from the electromagnetic wave radiating means (51) at a frequency of 5 or more times per one second and at an electromagnetic wave radiation ratio per unit time of 50% or less on average of said electromagnetic wave radiation ratio per unit time, wherein said electromagnetic wave radiation ratio per unit time is defined as the ratio of the electromagnetic wave radiation amount radiated to the light emitting part (60) to the whole electromagnetic wave radiated in a unit time, whereby the light emitting part (60) visually recognizably emits light, wherein
the light emitting parts (60) provided on said rim (17, 33), where a width of said rim (17, 33) is reduced, is located above said wave radiating means (51) formed as LEDs, so that the principle radiation direction of the LEDs are directed to the light emitting parts (60) at an angle upward relative to a direction parallel to a rotation axis of said tire (18, 35).

2. The vehicle (1, 100, 110, 120) as claimed in claim 1, wherein the light emitting device (50) has a power supply (19) which supplies electric power to a light mounted on the vehicle (1, 100, 110, 120), and the control unit (75) controls the electromagnetic wave radiating means (51) to radiate electromagnetic wave with an electric power less than a peak electric power that can be supplied, to make the light emitting part (60) visually recognizably emit light, and concurrently supplies electric power to the light.

3. The vehicle (1, 100, 110, 120) as claimed in any one of claims 1 or 2, wherein the light emitting device (50) has an optical member which changes the electromagnetic wave radiated from the electromagnetic wave radiating means (51) into a beam form, a converging form or a diverging form to become oriented toward a predetermined direction to be radiated to the light emitting part (60).

4. The vehicle (1, 100, 110, 120) as claimed in any one of claims 1 to 3, wherein the light emitting part (60) has a luminescent material layer (60c), and the luminescent material layer (60c) has a part with a large amount of luminescent material per unit area and a part with a small amount of luminescent material per unit area.

5. The vehicle (1, 100, 110, 120) as claimed in any one of claims 1 to 4, wherein the electromagnetic wave radiating means (51) radiates the electromagnetic wave in a direction inclined relative to a direction perpendicular to the light emitting part (60).

6. The vehicle (1, 100, 110, 120) as claimed in any one of claims 1 to 5, wherein both sides of the rim (17, 33) of the wheel are inclined.

7. The vehicle (1, 100, 110, 120) as claimed in any one of claims 4 to 6, wherein the light emitting part (60) is a luminescent member including an adhesive layer (60a) applied to a surface portion of the rotary part, a light reflecting layer (60b) laminated on said adhesive layer (60a) and the luminescent material layer (60c) laminated on the light reflecting layer (60b), wherein the light reflecting layer (60b) reflects the light emitted from the luminescent material layer (60c) to the surface side.

8. The vehicle (1, 100, 110, 120) as claimed in claim 7, wherein the luminescent material layer (60c) includes a central portion (60ca) including an amount of luminescent material and one side portion (60cb) at each side of the central portion (60ca), wherein each of the two side portions (60cb) has a smaller thickness than the thickness of the central portion (60ca) and has a smaller amount of luminescent material than the central portion (60ca).

## Patentansprüche

1. Fahrzeug (1, 100, 110, 120), umfassend eine an dem Fahrzeug (1, 100, 110, 120) befestigte lichtemittierende Vorrichtung (50), ein rotierendes Teil und ein nicht rotierendes Teil, wobei die lichtemittierende Vorrichtung (50) ein lichtemittierendes Teil (60), welches entweder an dem rotierenden Teil oder an dem nicht rotierenden Teil zu befestigen ist, und eine Einrichtung (51) zur Abstrahlung elektromagnetischer Wellen aufweist, welche an dem jeweils anderen Teil des rotierende Teils oder des nicht rotierenden Teils gegenüber dem lichtemittierenden Teil (60) zu befestigen ist, sodass Licht aus der Einrichtung (51) zur Abstrahlung elektromagnetischer Wellen zum Emittieren elektromagnetischer Wellen an eine eine Breite aufweisende Bestrahlungsfläche auf das lichtemittierende Teil (60) trifft, wobei das lichtemittierende Teil (60) einen Teil der Bestrahlungsfläche bildet, wobei das rotierende Teil ein Rad ist, welches eine Felge (17, 33) und einen Reifen (18, 35) aufweist, welcher um eine Rotationsachse (11, 23) drehbar ist, das lichtemittierende Teil (60) an beiden Seiten der Felge (17, 33) zu befestigen ist und die Einrichtung (51) zur Abstrahlung elektromagnetischer Wellen nahe der Rotationsachse des Reifens (18, 35) zu positionieren ist, wobei
die Einrichtung (51) zur Abstrahlung elektromagnetischer Wellen an dem nicht rotierenden Teil des Fahrzeuges (1, 100, 110, 120) zu befestigen ist, um die elektromagnetischen Wellen in einem Aufwärtswinkel relativ zu einer zu der Rotationsachse (11, 23) parallelen Richtung abzustrahlen,
**dadurch gekennzeichnet, dass**
die Einrichtung (51) zur Abstrahlung elektromagnetischer Wellen derart eingestellt ist, dass die Breite der Bestrahlungsfläche mindestens das 1,2-Fache einer Breite des lichtemittierenden Teils (60) beträgt,
wobei die lichtemittierende Vorrichtung (50) eine Steuereinheit (75) aufweist, durch welche eine Impulssteuerung der elektromagnetischen Wellen erfolgt, welche von der Einrichtung (51) zur Abstrahlung elektromagnetischer Wellen mit einer Frequenz von ≥ 5 mal pro Sekunde und mit einem Verhältnis der Abstrahlung elektromagnetischer Wellen pro Zeiteinheit von 50 % oder weniger im Durchschnitt des Verhältnisses der Abstrahlung elektromagnetischer Wellen pro Zeiteinheit abgestrahlt werden, wobei das Verhältnis der Abstrahlung elektromagnetischer Wellen pro Zeiteinheit als das Verhältnis der an das lichtemittierende Teil (60) abgestrahlten Menge der Abstrahlung elektromagnetischer Wellen zu der Gesamtheit in einer Zeiteinheit abgestrahlter elektromagnetischer Wellen definiert ist, wobei das lichtemittierende Teil (60) optisch erkennbar Licht emittiert, wobei das an einer Stelle verringerter Breite der Felge (17, 33) auf der Felge (17, 33) vorgesehene lichtemittierende Teil (60) über der als LEDs ausgebildeten Einrichtung (51) zur Abstrahlung von Wellen positioniert ist, sodass die Hauptstrahlrichtung der LEDs in einem Aufwärtswinkel relativ zu einer zu einer Rotationsachse des Reifens (18, 35) parallelen Richtung auf die lichtemittierenden Teile (60) gerichtet ist.

2. Fahrzeug (1, 100, 110, 120) nach Anspruch 1, wobei die lichtemittierende Vorrichtung (50) eine Stromversorgung (19) aufweist, welche eine an dem Fahrzeug (1, 100, 110, 120) befestigte Lampe mit elektrischem Strom versorgt, und wobei die Steuereinheit (75) die Einrichtung (51) zur Abstrahlung elektromagnetischer Wellen steuert, um elektromagnetische Wellen mit einem elektrischen Strom abzustrahlen, der geringer als ein Höchstwert des lieferbaren elektrischen Stroms ist, damit das lichtemittierende Teil (60) optisch erkennbar Licht emittiert, und die Lampe gleichzeitig mit elektrischem Strom versorgt.

3. Fahrzeug (1, 100, 110, 120) nach Anspruch 1 oder 2, wobei die lichtemittierende Vorrichtung (50) ein optisches Element aufweist, welches die von der Einrichtung (51) zur Abstrahlung elektromagnetischer Wellen abgestrahlten elektromagnetischen Wellen in eine Strahlform, eine konvergierende Form oder eine divergierende Form verändert, damit sie sich in eine vorbestimmte Richtung ausrichten, um auf das lichtemittierende Teil (60) abgestrahlt zu werden.

4. Fahrzeug (1, 100, 110, 120) nach einem der Ansprüche 1 bis 3, wobei das lichtemittierende Teil (60) eine Leuchtstoffschicht (60c) aufweist und die Leuchtstoffschicht (60c) ein Teil mit einer großen Menge Leuchtstoff pro Flächeneinheit und ein Teil mit einer kleinen Menge Leuchtstoff pro Flächeneinheit aufweist.

5. Fahrzeug (1, 100, 110, 120) nach einem der Ansprüche 1 bis 4, wobei die Einrichtung (51) zur Abstrahlung elektromagnetischer Wellen die elektromagnetischen Wellen in einer gegenüber einer zu dem lichtemittierenden Teil (60) senkrechten Richtung geneigten Richtung abstrahlt.

6. Fahrzeug (1, 100, 110, 120) nach einem der Ansprüche 1 bis 5, wobei beide Seiten der Felge (17, 33) des Rades abgeschrägt sind.

7. Fahrzeug (1, 100, 110, 120) nach einem der Ansprüche 4 bis 6, wobei das lichtemittierende Teil (60) ein Leuchtelement ist, welches eine auf einen Oberflächenabschnitt des rotierenden Teils aufgebrachte Klebstoffschicht (60a), eine auf die Klebstoffschicht (60a) laminierte lichtreflektierende Schicht (60b) und die Leuchtstoffschicht (60c) umfasst, die auf die lichtreflektierende Schicht (60b) laminiert ist, wobei die lichtreflektierende Schicht (60b) das von der Leuchtstoffschicht (60c) emittierte Licht in Richtung der Oberflächenseite reflektiert.

8. Fahrzeug (1, 100, 110, 120) nach Anspruch 7, wobei die Leuchtstoffschicht (60c) einen eine Menge Leuchtstoff enthaltenden mittleren Abschnitt (60ca) und auf jeder Seite des mittleren Abschnitts (60ca) einen seitlichen Abschnitt (60cb) umfasst, wobei die beiden seitlichen Abschnitte (60cb) jeweils eine geringere Dicke als der mittlere Abschnitt (60ca) und eine geringere Menge Leuchtstoff als der mittlere Abschnitt (60ca) aufweisen.

## Revendications

1. Véhicule (1, 100, 110, 120) comprenant un dispositif électroluminescent (50) fixé sur ledit véhicule (1, 100, 110, 120) ayant une pièce rotative et une pièce non rotative, le dispositif électroluminescent (50) ayant une pièce électroluminescente (60) qui doit être fixée sur une parmi la pièce rotative et la pièce non rotative et un dispositif (51) de rayonnement des ondes électromagnétiques qui doit être fixé sur l'autre parmi la pièce rotative et la pièce non rotative en face de la pièce électroluminescente (60) de sorte que la lumière du dispositif (51) de rayonnement des ondes électromagnétiques rencontre la pièce électroluminescente (60) pour émettre des ondes électromagnétiques à une zone d'irradiation ayant une largeur, la pièce électroluminescente (60) faisant partie de ladite zone d'irradiation, la pièce rotative étant une roue ayant une jante (17, 33) et un pneu (18, 35) qui est rotatif autour d'un axe de rotation (11, 23), la pièce électroluminescente (60) devant être fixée sur les deux côtés de la jante (17, 33) et le dispositif (51) de rayonnement des ondes électromagnétiques devant être positionné près de l'axe de rotation du pneu (18, 35),
le dispositif (51) de rayonnement des ondes électromagnétiques devant être fixé sur la pièce non rotative du véhicule (1, 100, 110, 120) pour rayonner les ondes électromagnétiques à un angle ascendant par rapport à une direction parallèle à l'axe de rotation (11, 23),
**caractérisé en ce que**
le dispositif (51) de rayonnement des ondes électromagnétiques est configuré de telle manière que la largeur de la zone d'irradiation est au moins 1,2 fois une largeur de la pièce électroluminescente (60),
le dispositif électroluminescent (50) ayant une unité de commande (75) qui effectue
une commande d'impulsion des ondes électromagnétiques rayonnées par le dispositif (51) de rayonnement des ondes électromagnétiques à une fréquence de 5 fois ou plus par seconde et à un rapport de rayonnement des ondes électromagnétiques par unité de temps de 50 % ou moins en moyenne dudit rapport de rayonnement des ondes électromagnétiques par unité de temps, ledit rapport de rayonnement des ondes électromagnétiques par unité de temps étant défini comme rapport de la quantité du rayonnement des ondes électromagnétiques rayonnée vers la pièce électroluminescente (60) à l'ensemble des ondes électromagnétiques rayonné dans une unité de temps, la pièce électroluminescente (60) émettant de la lumière de manière visuellement reconnaissable,
la pièce électroluminescentes (60) qui est prévue sur ladite jante (17, 33) où une largeur de ladite jante (17, 33) est diminuée étant positionnée au-dessus dudit dispositif (51) de rayonnement des ondes électromagnétiques qui est réalisé comme DEL, de sorte que la direction de rayonnement principale des DEL est dirigée vers les pièces électroluminescentes (60) à un angle ascendant par rapport à une direction parallèle à un axe de rotation dudit pneu (18, 35).

2. Véhicule (1, 100, 110, 120) selon la revendication 1, le dispositif électroluminescent (50) ayant une alimentation électrique (19) qui fournit du courant électrique à une lumière fixée sur le véhicule (1, 100, 110, 120), et l'unité de commande (75) contrôlant le dispositif (51) de rayonnement des ondes électromagnétiques pour rayonner les ondes électromagnétiques avec un courant électrique inférieur à un courant électrique de crête qui peut être fourni pour provoquer que la pièce électroluminescente (60) émet de la lumière de manière visuellement reconnaissable, et, en même temps, fournissant du courant électrique à la lumière.

3. Véhicule (1, 100, 110, 120) selon la revendication 1 ou 2, le dispositif électroluminescent (50) ayant un élément optique qui change les ondes électromagnétiques rayonnées par le dispositif (51) de rayonnement des ondes électromagnétiques en une forme de faisceau, une forme convergente ou une forme divergente pour qu'elles se dirigent vers une direction prédéterminée afin d'être rayonnées vers la pièce électroluminescente (60).

4. Véhicule (1, 100, 110, 120) selon l'une quelconque des revendications 1 à 3, la pièce électroluminescente (60) ayant une couche de matériau luminescent (60c), et la couche de matériau luminescent (60c) ayant une pièce avec une grande quantité de matériau luminescent par unité de surface et une pièce avec une petite quantité de matériau luminescent par unité de surface.

5. Véhicule (1, 100, 110, 120) selon l'une quelconque des revendications 1 à 4, le dispositif (51) de rayonnement des ondes électromagnétiques rayonnant les ondes électromagnétiques dans une direction inclinée par rapport à une direction perpendiculaire à la pièce électroluminescente (60).

6. Véhicule (1, 100, 110, 120) selon l'une quelconque des revendications 1 à 5, les deux côtés de la jante (17, 33) de la roue étant inclinés.

7. Véhicule (1, 100, 110, 120) selon l'une quelconque des revendications 4 à 6, la pièce électroluminescente (60) étant un élément luminescent comprenant une couche adhésive (60a) appliquée sur une partie de surface de la pièce rotative, une couche réfléchissant la lumière (60b) laminée sur ladite couche adhésive (60a) et la couche de matériau luminescent (60c) laminée sur la couche réfléchissant la lumière (60b), la couche réfléchissant la lumière (60b) réfléchissant la lumière émise par la couche de matériau luminescent (60c) vers le côté de surface.

8. Véhicule (1, 100, 110, 120) selon la revendication 7, la couche de matériau luminescent (60c) comprenant une partie centrale (60ca) contenant une quantité de matériau luminescent et une partie latérale (60cb) de chaque côté de la partie centrale (60ca), chacune des deux parties latérales (60cb) ayant une épaisseur inférieure à l'épaisseur de la partie centrale (60ca) et ayant une quantité de matériau luminescent inférieure à celle-ci de la partie centrale (60ca).
